# FASCICULE DE BREVET EUROPEEN

(11) **EP 3 534 172 B1**
(45) Date de publication et mention de la délivrance du brevet: **15.04.2020**
(21) Numéro de dépôt: 19159397.9
(22) Date de dépôt: 26.02.2019
(51) Int. Cl.: G01S 5/08, G01S 5/02, G01S 3/04, B64C 39/02

(54) **SYSTEME DE GEOLOCALISATION, AERONEF ET PROCEDE DE GEOLOCALISATION ASSOCIE**
ORTUNGSSYSTEM, FLUGZEUG UND ORTUNGSVERFAHREN
A GEOLOCATION SYSTEM, AND AN ASSOCIATED AIRCRAFT AND GEOLOCATION METHOD

(30) Priorité: 01.03.2018 FR 1870221
(43) Date de publication de la demande: 04.09.2019
(73) Titulaire: Airbus Helicopters, 13725 Marignane Cedex (FR)
(72) Inventeur: DUTRUC, Hervé, 13820 ENSUES LA REDONNE (FR)
(74) Mandataire: GPI & Associés

(56) Documents cités:
- WO-A1-2004/027446
- US-A1- 2011 068 980
- US-A1- 2015 130 664
- US-A1- 2016 018 509
- US-A1- 2017 199 269

## Description

La présente invention concerne le domaine de la géolocalisation notamment d'aéronefs. En outre, de tels aéronefs peuvent être des aéronefs de type autonome tels que des drones et ne pas embarquer de pilote ou d'équipage à leur bord. De tels aéronefs sont généralement désignés par l'acronyme anglais UAV désignant en langue anglaise l'expression « Unmanned Aerial Vehicle ».

De façon générale, il est connu de nombreux systèmes de géolocalisation aptes à être utilisés par des aéronefs tels des drones. De tels systèmes de navigation peuvent notamment consister en des systèmes de positionnement par satellites tels que le système connu par l'acronyme GPS désignant l'expression en langue anglaise « Global Positioning System ».

Cependant, un problème de fiabilité existe avec de tels systèmes de positionnement par satellites. En effet, il n'est en aucun cas possible d'obtenir un engagement des propriétaires des satellites relatif à la continuité dans le temps de la fourniture du service de transmission des signaux émis par ces satellites.

De plus, de tels signaux émis par les satellites utilisent généralement une bande de fréquences très étroite, voire même uniquement deux fréquences fixes et connues de 1 575,42 MHz et 1 227,60 MHz pour le système de positionnement GPS. En outre, ces signaux sont peu puissants et peuvent alors être très facilement brouillés au sol par exemple par une personne mal intentionnée. Ainsi, en présence d'un brouilleur activé à proximité d'un aéronef, il est alors impossible d'utiliser un tel système de géolocalisation par satellites.

Par ailleurs tel que décrit dans le document US 2015/0130664, il est également connu des systèmes de géolocalisation dans lesquels un objet émet un signal reçu par différentes antennes réceptrices agencées au sol. Dans ce cas, l'analyse du temps entre l'émission du signal et sa réception par les différentes antennes réceptrices permet de déterminer une position de l'objet.

Cependant de tels systèmes de géolocalisation sont particulièrement onéreux à mettre en place, car pour pouvoir être utilisés, ils nécessitent d'équiper et d'installer un grand nombre d'antennes réceptrices dédiées au sol. De plus, l'émission par un aéronef d'un signal n'est pas compatible avec certaines missions de celui-ci dans lesquelles une discrétion maximale est requise.

De plus, le document US 2015/130664 se rapporte à un système de géolocalisation dans lequel des équipements mobiles, et non des aéronefs, sont équipés de capteurs magnétiques. Un tel document ne décrit donc pas un système de géolocalisation adapté pour des aéronefs.

En outre, le document US 2017/199269 divulgue un système de géolocalisation d'un drone (140) équipé d'une ou plusieurs antenne(s) réceptrice(s) (146) pour recevoir les signaux émis pas des stations terrestres (110, 120, 130). Un tel drone comporte également une unité d'analyse (142) pour déterminer les directions d'émission des stations terrestres, une mémoire (150) pour stocker les coordonnées des différentes stations et un calculateur pour calculer les coordonnées courantes du drone.

Ainsi, un tel drone comporte une ou plusieurs antenne(s) réceptrice(s) (146) d'un même type ou une combinaison d'antennes et de transducteurs réalisant une identification des directions d'émission de ces signaux en utilisant deux technologies distinctes l'une de l'autre.

Cependant, le document US 2017/199269 ne divulgue pas un procédé de géolocalisation comportant une étape d'analyse pour réaliser un déphasage permettant de déphaser de 90° les signaux radioélectriques reçu par une antenne réceptrice.

Un tel procédé de géolocalisation ne permet alors pas de faciliter l'identification de deux directions d'émission des signaux radioélectriques en générant deux diagrammes de rayonnement distincts.

Le document US 2016/018509 décrit quant à lui un drone équipé d'un système pour identifier la direction et la distance d'un émetteur d'ondes électromagnétiques. Un tel drone comporte alors une antenne qui peut être pivotée par un opérateur.

Cependant, le document US 2016/018509 ne divulgue pas qu'une unité d'analyse du drone peut réaliser un déphasage permettant de déphaser de 90° les signaux radioélectriques reçu par une antenne réceptrice.

Le document WO 2004/027446 divulgue un système de géolocalisation d'un aéronef équipé d'une ou plusieurs antenne(s) réceptrice(s) pour recevoir les signaux émis pas des balises terrestres.

Cependant à l'instar du document US 2017/199269, le document WO 2004/027446 ne divulgue pas l'utilisation d'une unité d'analyse réalisant un déphasage permettant de déphaser de 90° les signaux radioélectriques reçu par une antenne réceptrice.

La présente invention a alors pour objet de proposer un système de géolocalisation permettant de s'affranchir des limitations mentionnées ci-dessus. Ainsi, le but de l'invention est de fournir une solution simple, sûre et efficace dans le temps permettant d'assurer la géolocalisation et le positionnement d'un aéronef en déterminant en temps réel ses coordonnées en latitude et en longitude.

Un autre objectif de l'invention est d'éviter les éventuels problèmes de brouillage en utilisant des signaux de forte puissance et sur une large bande de fréquences.

Enfin, un autre but de l'invention est de fournir une solution peu onéreuse et permettant d'éviter l'émission d'un signal par l'aéronef de façon à garantir une grande discrétion d'utilisation de l'aéronef.

L'invention se rapporte donc à un système de géolocalisation destiné à calculer des coordonnées courantes au moins en longitude et en latitude d'une position courante d'un aéronef.

Un tel système de géolocalisation comporte :
- au moins deux stations terrestres distinctes l'une de l'autre et aptes à émettre des signaux radioélectriques à des fréquences prédéterminées, de telles stations terrestres comportant une première station terrestre émettant les signaux radioélectriques selon au moins une première fréquence prédéterminée et une deuxième station terrestre émettant les signaux radioélectriques selon au moins une deuxième fréquence prédéterminée,
- au moins deux antennes réceptrices comportant une première antenne réceptrice et une deuxième antenne réceptrice respectivement aptes à recevoir les signaux radioélectriques,
- une unité d'analyse des signaux radioélectriques, l'unité d'analyse étant connectée aux antennes réceptrices et permettant de déterminer au moins deux directions d'émission des signaux radioélectriques, de telles directions d'émission comportant d'une part une première direction d'émission correspondant à une première droite passant par la position courante de l'aéronef ainsi que par la première station terrestre et d'autre part une deuxième direction d'émission correspondant à une deuxième droite passant par la position courante de l'aéronef ainsi que par la deuxième station terrestre,
- une mémoire destinée à contenir tout ou partie d'une base de données comprenant au moins des données de position associant aux première et deuxième fréquences prédéterminées des signaux radioélectriques respectivement des premières coordonnées en latitude et en longitude de la première station terrestre et des deuxièmes coordonnées en latitude et en longitude de la deuxième station terrestre, et
- un calculateur pour calculer les coordonnées courantes en latitude et en longitude correspondant à la position courante de l'aéronef à partir d'une part des premières et deuxièmes coordonnées en latitude et en longitude des première et deuxième stations terrestres et d'autre part des première et deuxième directions d'émission des signaux radioélectriques.

Selon l'invention, un tel système de géolocalisation est remarquable en ce que l'unité d'analyse des signaux radioélectriques réalise un premier déphasage de 90° des signaux radioélectriques reçus par la première antenne réceptrice puis un deuxième déphasage de 90° des signaux radioélectriques reçus par la deuxième antenne réceptrice.

Autrement dit, un tel système de géolocalisation permet d'utiliser des signaux radioélectriques émis par différents propriétaires de radios émettant à des fréquences prédéterminées. De telles première et deuxième fréquences prédéterminées peuvent être choisies distinctes l'une de l'autre mais peuvent également être identiques. Dans ce cas, un autre critère de différenciation peut être utilisé comme par exemple l'analyse de la modulation de fréquences pour chacune des première et deuxième fréquences prédéterminées correspondant respectivement au moins deux stations terrestres.

De plus, les signaux radioélectriques peuvent être émis sur une large bande de fréquences, et par conséquent il est peu probable que toutes les fréquences des signaux radioélectriques émis soient brouillées et/ou connaissent un problème d'émission.

En outre, les antennes réceptrices sont aptes à capter des fréquences prédéterminées dans une bande de fréquences à laquelle appartiennent les première et deuxième fréquences prédéterminées.

Par ailleurs, l'unité d'analyse permet à la fois d'identifier les fréquences captées par les antennes réceptrices et de déterminer au moins deux directions d'émission des signaux radioélectriques par au moins deux stations terrestres.

Le calculateur permet quant à lui de déterminer par des calculs mathématiques les coordonnées courantes en latitude et en longitude correspondant à la position courante de l'aéronef en calculant les coordonnées du point d'intersection entre les première et deuxième droites correspondant aux deux directions d'émission des signaux radioélectriques et en prenant en compte les premières et deuxièmes coordonnées en latitude et en longitude des première et deuxième stations terrestres, stockées dans la mémoire contenant une base de données.

L'unité d'analyse et le calculateur peuvent notamment être formés respectivement par des ordinateurs, des processeurs, des circuits intégrés, des systèmes programmables et/ou des circuits logiques. De plus, l'unité d'analyse et le calculateur peuvent être formés par un même ensemble programmable ou par deux ensembles programmables distincts l'un de l'autre.

Avantageusement, les antennes réceptrices, l'unité d'analyse, la mémoire et le calculateur peuvent être agencés sur l'aéronef.

Un tel agencement permet ainsi de rendre autonome l'aéronef qui peut alors déterminer en temps réel ses coordonnées courantes en latitude et en longitude et suivre une route prédéterminée jusqu'à un point d'arrivée mémorisé.

En pratique à titre d'exemple, les fréquences prédéterminées des signaux radioélectriques peuvent être choisies dans une bande de fréquences réservée à une radiodiffusion commerciale en modulation de fréquence, l'unité d'analyse permettant de balayer la bande de fréquences pour identifier les fréquences prédéterminées.

L'utilisation de cette bande de fréquence permet ainsi d'utiliser des stations terrestres préexistantes et par conséquent de ne pas avoir à déployer un réseau de stations terrestres pour émettre les signaux radioélectriques. En outre, une telle modulation de fréquence est un mode de modulation consistant à transmettre un signal par la modulation de la fréquence d'un signal porteur.

Selon un exemple de réalisation avantageux de l'invention, les fréquences prédéterminées des signaux radioélectriques peuvent être comprises dans une bande de fréquences entre 88MHz et 108MHz.

Une telle bande de fréquences est en effet suffisamment large pour fournir un grand nombre de fréquences prédéterminées et correspondant à des émissions de radios musicales et/ou d'informations. Cette bande de fréquences correspond, dans de nombreux pays et notamment en Europe ou aux Etats-Unis, à celle utilisée pour la radiodiffusion commerciale en modulation de fréquence.

Avantageusement, les signaux radioélectriques peuvent comporter des signaux audios associés respectivement en parallèle à au moins un service de transmission de données numériques.

En d'autres termes, pour sécuriser l'identification d'une des fréquences prédéterminées utilisée par le système de géolocalisation, il est avantageux d'utiliser un service de type "RDS" correspondant à l'acronyme de l'expression en langue anglaise "Radio Data System".

En pratique, les antennes réceptrices peuvent être respectivement choisies parmi le groupe comportant les antennes de type "quart d'onde" et les antennes de type "demi onde".

Autrement dit, les antennes réceptrices peuvent être par exemple constituées respectivement chacune d'un élément longiligne de longueur égale au quart et/ou à la moitié de la longueur d'onde des signaux radioélectriques. Un tel élément longiligne est alors agencé perpendiculairement par rapport à un plan conducteur pour les antennes de type quart d'onde ou bien encore sur un côté de l'aéronef pour les antennes de type demi onde.

Selon un exemple de réalisation avantageux de l'invention, la première antenne réceptrice peut balayer une plage de fréquences prédéterminées des signaux radioélectriques et identifier les stations terrestres distinctes l'une de l'autre et la deuxième antenne réceptrice peut déterminer les directions d'émission des signaux radioélectriques.

Un tel agencement permet ainsi d'associer différentes fonctions complémentaires à ces deux antennes réceptrices. Ainsi, la première antenne réceptrice permet de déterminer les fréquences des signaux radioélectriques émis par les stations terrestres alors que la deuxième antenne réceptrice permet de mesurer l'intensité des signaux radioélectriques et donc la direction d'émission des stations terrestres.

Dans ce cas particulier, la deuxième antenne réceptrice peut alors être formée par une ou plusieurs antenne(s) directive(s).

Comme déjà évoqué, l'invention concerne également un aéronef apte à recevoir des signaux radioélectriques à des fréquences prédéterminées, les signaux radioélectriques étant émis par au moins deux stations terrestres comportant une première station terrestre émettant les signaux radioélectriques selon au moins une première fréquence prédéterminée et une deuxième station terrestre émettant les signaux radioélectriques selon au moins une deuxième fréquence prédéterminée.

Un tel aéronef comporte :
- au moins deux antennes réceptrices comportant une première antenne réceptrice et une deuxième antenne réceptrice respectivement aptes à recevoir les signaux radioélectriques,
- une unité d'analyse des signaux radioélectriques, l'unité d'analyse étant connectée aux antennes réceptrices et permettant de déterminer au moins deux directions d'émission des signaux radioélectriques, les directions d'émission comportant d'une part une première direction d'émission correspondant à une première droite passant par une position courante de l'aéronef ainsi que par la première station terrestre et d'autre part une deuxième direction d'émission correspondant à une deuxième droite passant par la position courante de l'aéronef ainsi que par la deuxième station terrestre,
- une mémoire destinée à contenir tout ou partie d'une base de données comprenant au moins des données de position associant aux première et deuxième fréquences prédéterminées des signaux radioélectriques respectivement des premières coordonnées en latitude et en longitude de la première station terrestre et des deuxièmes coordonnées en latitude et en longitude de la deuxième station terrestre, et
- un calculateur pour calculer des coordonnées courantes en latitude et en longitude correspondant à la position courante de l'aéronef à partir d'une part des premières et deuxièmes coordonnées en latitude et en longitude des première et deuxième stations terrestres et d'autre part des première et deuxième directions d'émission des signaux radioélectriques.

Selon l'invention, un tel aéronef est remarquable en ce que l'unité d'analyse des signaux radioélectriques réalise un premier déphasage de 90° des signaux radioélectriques reçus par la première antenne réceptrice puis un deuxième déphasage de 90° des signaux radioélectriques reçus par la deuxième antenne réceptrice.

A l'instar du système de géolocalisation, un tel aéronef peut ainsi capter des signaux radioélectriques émis par différents propriétaires de radios émettant à des fréquences prédéterminées. Comme précédemment, les signaux radioélectriques peuvent être émis sur une large bande de fréquences, et par conséquent il est peu probable que toutes les fréquences des signaux radioélectriques émis soient brouillées et/ou connaissent un problème d'émission.

En outre, les antennes réceptrices de l'aéronef sont aptes à capter des fréquences prédéterminées dans une bande de fréquences à laquelle appartiennent les première et deuxième fréquences prédéterminées.

Par ailleurs, l'unité d'analyse embarquée sur l'aéronef permet à la fois d'identifier les différentes fréquences captées par les antennes réceptrices et de déterminer au moins deux directions d'émission des signaux radioélectriques par au moins deux stations terrestres.

Avantageusement, l'aéronef peut comporter un instrument de navigation permettant d'identifier un sens de déplacement de l'aéronef par rapport à une référence de direction dans un plan horizontal passant par l'aéronef.

Un tel instrument de navigation permet ainsi de rendre autonome l'aéronef en lui permettant de suivre un cap prédéterminé. Connaissant une position courante de l'aéronef et une position de destination, l'aéronef est alors apte à naviguer au moins temporairement en suivant une direction fournie par l'instrument de navigation. Un tel instrument de navigation est alors connecté à un organe de commande des moyens de propulsion et/ou de sustentation de l'aéronef permettant de piloter un tel aéronef.

En pratique, un tel instrument de navigation peut être choisi parmi le groupe comportant les compas magnétiques, les compas gyroscopiques, les compas électroniques et les compas satellitaires.

De tels compas permettent en effet de fournir une solution simple, sûre et efficace permettant à l'aéronef de suivre un cap prédéterminé.

En outre, les antennes réceptrices comportant un degré de mobilité en rotation par rapport à un châssis fixe de l'aéronef, un tel aéronef peut comporter au moins un moteur permettant d'actionner en rotation les antennes réceptrices sur elles-mêmes autour d'un axe de rotation Z',Z".

En d'autres termes, les antennes réceptrices peuvent pivoter sur elles-mêmes en étant entrainées en rotation par les moteurs qui peuvent être par exemple électriques. Un tel agencement motorisé en rotation des antennes réceptrices peut par exemple permettre à l'unité d'analyse de l'aéronef de faciliter l'identification des directions d'émission des signaux radioélectriques.

Dans le cas contraire, les antennes peuvent être fixes et c'est l'aéronef qui tourne sur lui-même. Cette rotation peut même être évitée en tirant du signal reçu, une direction de réception après un traitement du signal reçu.

L'invention se rapporte également à un procédé de géolocalisation destiné à calculer des coordonnées courantes au moins en longitude et en latitude d'une position courante d'un aéronef.

Un tel procédé de géolocalisation comporte :
- deux étapes d'émission de signaux radioélectriques à des fréquences prédéterminées respectivement par au moins deux stations terrestres distinctes l'une de l'autre, les stations terrestres comportant une première station terrestre émettant les signaux radioélectriques selon au moins une première fréquence prédéterminée et une deuxième station terrestre émettant les signaux radioélectriques selon au moins une deuxième fréquence prédéterminée,
- une étape de réception des signaux radioélectriques par au moins deux antennes réceptrices comportant une première antenne réceptrice et une deuxième antenne réceptrice,
- une étape d'analyse des signaux radioélectriques, l'étape d'analyse permettant de déterminer au moins deux directions d'émission des signaux radioélectriques, les directions d'émission comportant d'une part une première direction d'émission correspondant à une première droite passant par la position courante de l'aéronef ainsi que par la première station terrestre et d'autre part une deuxième direction d'émission correspondant à une deuxième droite passant par la position courante de l'aéronef ainsi que par la deuxième station terrestre,
- une étape de stockage permettant de stocker dans une mémoire tout ou partie d'une base de données comprenant au moins des données de position associant aux première et deuxième fréquences prédéterminées des signaux radioélectriques respectivement des premières coordonnées en latitude et en longitude de la première station terrestre et des deuxièmes coordonnées en latitude et en longitude de la deuxième station terrestre, et
- une étape de calcul permettant de calculer les coordonnées courantes en latitude et en longitude correspondant à la position courante de l'aéronef à partir d'une part des premières et deuxièmes coordonnées en latitude et en longitude des première et deuxième stations terrestres et d'autre part des première et deuxième directions d'émission des signaux radioélectriques.

Selon l'invention, un tel procédé de géolocalisation est remarquable en ce que l'étape d'analyse comporte une première sous étape de déphasage consistant à déphaser de 90° les signaux radioélectriques reçus par une première antenne réceptrice puis une deuxième sous étape de déphasage consistant à déphaser de 90° les signaux radioélectriques reçus par une deuxième antenne réceptrice.

Autrement dit, un tel procédé de géolocalisation comporte une étape de réception permettant de capter des signaux radioélectriques émis par différents propriétaires de radios émettant à des fréquences prédéterminées. De plus, les signaux radioélectriques peuvent être émis sur une large bande de fréquences, et par conséquent il est peu probable que toutes les fréquences des signaux radioélectriques émis soient brouillées et/ou connaissent un problème d'émission.

En outre, l'étape de réception est mise en œuvre par les antennes réceptrices pour capter des fréquences prédéterminées dans une bande de fréquences à laquelle appartiennent les première et deuxième fréquences prédéterminées.

Par ailleurs, l'étape d'analyse permet à la fois d'identifier les différentes fréquences captées par les antennes réceptrices et de déterminer au moins deux directions d'émission des signaux radioélectriques par au moins deux stations terrestres.

Des telles sous étapes de déphasage permettent en effet de générer deux diagrammes de rayonnement distincts qui permettent de déterminer les première et deuxième directions d'émission des signaux radioélectriques.

En pratique, l'étape d'analyse peut comporter une sous étape de rotation des première et deuxième antennes réceptrices permettant de générer un diagramme illustrant deux cardioïdes représentatives de l'amplitude maximale des signaux radioélectriques reçus respectivement par chacune des première et deuxième antennes, une direction d'émission des signaux radioélectriques étant identifiée lorsque les deux cardioïdes sont symétriques par rapport à un axe des ordonnées du diagramme.

Ainsi, la rotation des première et deuxième antennes réceptrices permet d'obtenir des diagrammes en forme de cardioïdes pour chacune des première et deuxième antennes réceptrices. L'analyse de la forme, de l'orientation et de la taille des deux cardioïdes de chaque diagramme permet alors de déterminer la direction d'émission des signaux radioélectriques.

En effet, les deux diagrammes de rayonnement peuvent présenter des formes de cardioïdes pour chacun des signaux radioélectriques reçus par les première et deuxième antennes réceptrices. Lorsque les signaux radioélectriques reçus présentent le même niveau sur chacune des cardioïdes, la direction des stations émettrices est inscrite dans un plan vertical perpendiculaire à un plan de réception formé par les deux antennes réceptrices. Un tel plan de réception est alors déterminé comme étant le plan passant par les milieux des première et deuxième antennes réceptrices. La direction d'émission de chacun des signaux radioélectriques est alors déterminée par une droite d'intersection entre le plan vertical perpendiculaire au plan de réception et un plan horizontal.

Dés lors, le déphasage de 90° peut être associé à l'une des deux antennes puis à l'autre, ce qui permet de générer successivement deux diagrammes de rayonnement distincts. Pour une station d'émission donnée, en mesurant le niveau de signal reçu successivement dans les deux configurations qui donnent ces deux diagrammes de rayonnement, il peut être aisément déterminé, en positionnant les deux antennes réceptrices à l'avant ou à l'arrière de l'aéronef, si la station d'émission se trouve agencée à droite ou à gauche suivant une direction longitudinale de l'aéronef s'étendant entre une face arrière et une face avant de celui-ci.

Ensuite, soit par calcul ou soit en appliquant une rotation aux antennes réceptrices par rapport au sol, la direction d'émission de la station d'émission peut être déterminée.

Ainsi, selon un premier exemple de réalisation de l'invention, la sous étape de rotation des première et deuxième antennes réceptrices peut être réalisée en faisant tourner l'aéronef sur lui-même autour d'un axe vertical Z passant par un centre géométrique de l'aéronef.

Selon ce premier exemple, les première et deuxième antennes réceptrices peuvent être agencées de manière fixe par rapport à un châssis de l'aéronef. Autrement dit, les première et deuxième antennes réceptrices sont alors assujetties en liaison de type encastrement avec le châssis de l'aéronef et peuvent être par exemple installées sur les côtés de l'aéronef.

Selon un second exemple de réalisation de l'invention, les première et deuxième antennes réceptrices comportant respectivement chacune un degré de mobilité en rotation par rapport à un châssis fixe de l'aéronef, la sous étape de rotation peut être réalisée en actionnant en rotation, par au moins un moteur, chaque antenne réceptrice sur elle-même autour d'un axe de rotation Z',Z".

Ainsi selon ce second exemple, les première et deuxième antennes réceptrices peuvent pivoter sur elles-mêmes par rapport au châssis de l'aéronef respectivement autour de leur axe de rotation Z',Z"

L'invention et ses avantages apparaîtront avec plus de détails dans le cadre de la description qui suit avec des exemples donnés à titre illustratif en référence aux figures annexées qui représentent :
- la figure 1, un logigramme illustrant un système de géolocalisation conforme à l'invention,
- la figure 2, une vue de dessus d'un premier exemple de réalisation d'aéronef conforme à l'invention,
- la figure 3, une vue de face d'un second exemple de réalisation d'aéronef conforme à l'invention,
- les figures 4 et 5, deux logigrammes illustrant deux variantes de procédés de géolocalisation conformes à l'invention,
- la figure 6, un diagramme représentatif de l'amplitude des signaux radioélectriques reçus, conformément à l'invention.

Les éléments présents dans plusieurs figures distinctes sont affectés d'une seule et même référence.

Comme déjà évoqué, l'invention se rapporte à un système de géolocalisation, un aéronef et un procédé de géolocalisation permettant de calculer les coordonnées courantes au moins en longitude et en latitude d'une position courante de l'aéronef.

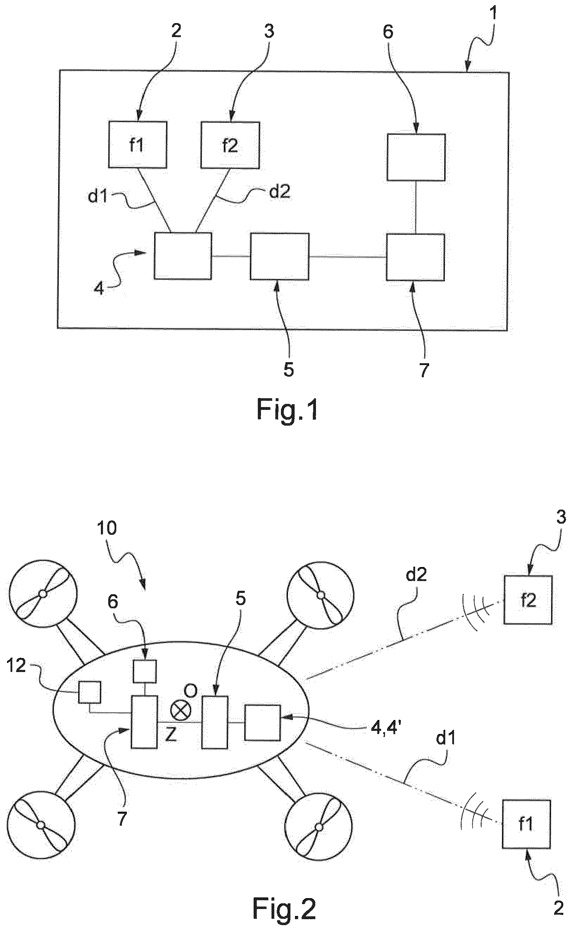

Tel que représenté à la figure 1, un tel système de géolocalisation 1 comporte ainsi au moins deux stations terrestres 2 et 3 distinctes et localisées à des endroits distincts l'un de l'autre sur la surface terrestre. De telles stations terrestres 2, 3 peuvent être préexistantes ou non et permettent d'émettre des signaux radioélectriques à des fréquences prédéterminées f1 et f2 qui peuvent être distinctes l'une de l'autre mais pas nécessairement. En effet, il est également envisageable de différentier les stations terrestres 2, 3 par exemple par une analyse de la modulation correspondant respectivement aux signaux radioélectriques émis.

En outre, selon un exemple de réalisation particulier, de telles stations terrestres 2, 3 peuvent être formées par des stations préexistantes permettant la radiodiffusion de musiques, d'informations ou d'émissions. Les fréquences prédéterminées f1 et f2 des signaux radioélectriques peuvent ainsi être choisies dans une bande de fréquences réservée à une radiodiffusion commerciale en modulation de fréquence et être par exemple comprises dans une bande de fréquences entre 88MHz et 108MHz.

Par ailleurs, un tel système de géolocalisation 1 comporte également au moins deux antennes réceptrices 4 et 4' pour recevoir les signaux radioélectriques et une unité d'analyse 5 connectée à ces antennes réceptrices 4 et 4'. L'unité d'analyse 5 permet ainsi d'analyser les signaux radioélectriques reçus pour déterminer des directions d'émission d1 et d2 respectives des stations terrestres 2 et 3 et donc leurs positionnements relatifs par rapport aux antennes réceptrices 4 et 4' agencées sur l'aéronef.

En outre, un tel système de géolocalisation 1 comporte aussi une mémoire 6 apte à stocker une base de données représentatives des coordonnées en latitude et en longitude des stations terrestres 2, 3 associées respectivement aux fréquences prédéterminées f1 et f2 des signaux radioélectriques qu'elles émettent.

Enfin, le système de géolocalisation comporte un calculateur 7 à la fois connecté à la mémoire 6 et à l'unité d'analyse 5 pour calculer les coordonnées courantes de l'aéronef. Un tel calcul est réalisé à partir d'une part des premières et deuxièmes coordonnées en latitude et en longitude des deux stations terrestres 2, 3 et d'autre part des deux directions d'émission d1, d2 des signaux radioélectriques.

En outre, l'unité d'analyse 5 et le calculateur 7 peuvent notamment être formés respectivement par des ordinateurs, des processeurs, des circuits intégrés, des systèmes programmables et/ou des circuits logiques. De plus, l'unité d'analyse 5 et le calculateur 7 peuvent être confondus ou disjoints l'un de l'autre.

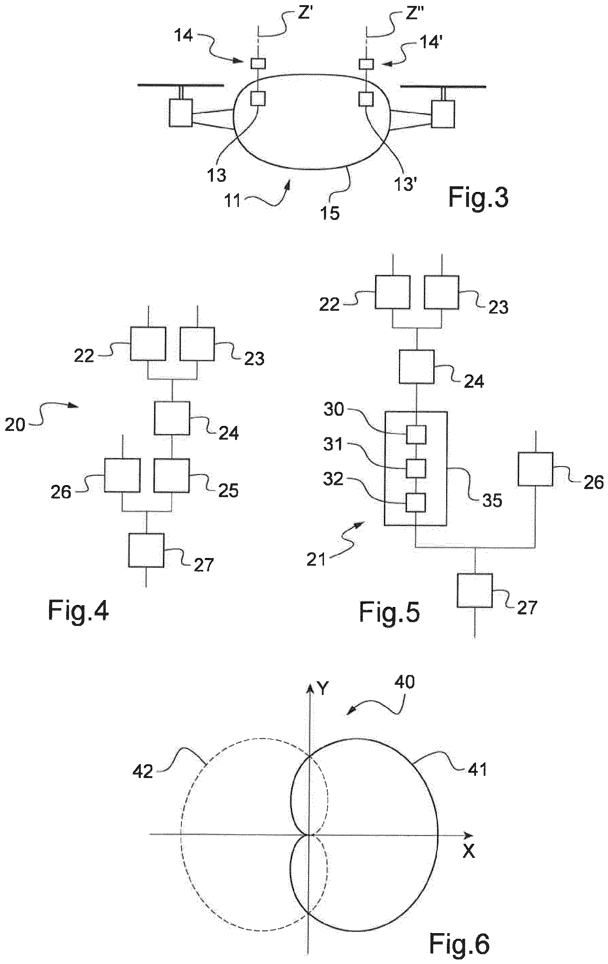

Telle que représentée aux figures 2 et 3, l'invention se rapporte également à un aéronef 10, 11.

Ainsi selon un premier exemple de réalisation d'un aéronef 10 représenté à la figure 2, les deux antennes réceptrices 4 et 4' peuvent être agencées de manière fixe et unidirectionnelle sur l'aéronef 10. Selon ce premier exemple de réalisation, l'aéronef 10 peut alors être apte à pivoter sur lui-même autour d'un axe vertical Z passant par un centre géométrique O de l'aéronef 10. Un tel aéronef 10 peut ainsi être par exemple formé par un giravion (non représenté) ou tel que représenté par un drone de type multirotor par exemple.

Un tel aéronef 10 peut donc embarquer sur un châssis deux antennes réceptrices 4 et 4', une unité d'analyse 5, une mémoire 6 et un calculateur 7 tels que décrits précédemment pour le système de géolocalisation 1.

L'aéronef 10 peut également comporter un instrument de navigation 12 de manière à par exemple rendre autonome le pilotage de l'aéronef 10. En effet, en connaissant les cordonnées de la position courante de l'aéronef et celles d'une destination, il est possible de piloter automatiquement la trajectoire de l'aéronef 10.

Tel que représenté à la figure 3, un second exemple de réalisation d'aéronef 11 peut consister en un drone comportant un châssis fixe 15 sur lequel sont agencées deux antennes réceptrices 14, 14' comportant chacune un degré de liberté en rotation autour d'un axe Z', Z" par rapport au châssis fixe 15. De telles antennes réceptrices 14, 14' peuvent alors être entrainées en rotation respectivement par un moteur 13, 13' qui peut être avantageusement électrique.

En outre, les deux exemples de réalisation d'aéronef 10 et 11 comportent chacun deux antennes réceptrices permettant respectivement de mesurer une caractéristique des signaux radioélectriques reçus, telle que l'amplitude maximale par exemple et par conséquent d'identifier les deux directions d'émission d1 et d2 des signaux radioélectriques.

Telle que représentée aux figures 4 et 5, l'invention se rapporte également aux procédés de géolocalisation 20, 21 d'un aéronef 10, 11.

De tels procédés de géolocalisation 20, 21 comportent ainsi chacun deux étapes d'émission 22, 23 de signaux radioélectriques à des fréquences prédéterminées f1, f2 respectivement par au moins deux stations terrestres 2, 3 distinctes l'une de l'autre. Ces procédés de géolocalisation 20, 21 comportent ensuite une étape de réception 24 des signaux radioélectriques par au moins deux antennes réceptrices 4, 4', 14, 14'.

Puis, les procédés de géolocalisation 20, 21 comportent une étape d'analyse 25, 35 des signaux radioélectriques pour déterminer au moins deux directions d'émission d1, d2 des signaux radioélectriques.

Telle que représentée à la figure 5, un telle étape d'analyse 35 peut comporter une première sous étape de déphasage 30 permettant de déphaser de 90° temporairement les signaux radioélectriques reçus par une première antenne réceptrice 4, 14 puis une deuxième sous étape de déphasage 31 pour déphaser de 90° temporairement les signaux radioélectriques reçus par une deuxième antenne réceptrice 4', 14'.

Comme déjà évoqué précédemment, l'étape d'analyse 35 peut alors comporter une sous étape de rotation 32 des première et deuxième antennes réceptrices 4, 14 et 4', 14' permettant de mesurer et d'identifier l'amplitude maximale des signaux radioélectriques reçus respectivement par chacune des première et deuxième antennes 4, 14 et 4', 14'.

Ainsi, grâce à cette mesure de l'amplitude des signaux radioélectriques, l'étape d'analyse 35 permet alors de déterminer les deux directions d'émission d1, d2 des signaux radioélectriques.

Par ailleurs, les procédés de géolocalisation 20, 21 comportent une étape de stockage 26 permettant de stocker dans une mémoire 6 une base de données au moins partielle comprenant des données de position associant fréquences prédéterminées f1 et f2 des signaux radioélectriques respectivement des premières coordonnées en latitude et en longitude de la première station terrestre 2 et des deuxièmes coordonnées en latitude et en longitude de la deuxième station terrestre 3.

Enfin, les procédés de géolocalisation 20, 21 comportent une étape de calcul 27 permettant de calculer les coordonnées courantes en latitude et en longitude correspondant à la position courante de l'aéronef 10, 11. Une telle étape de calcul 27 est ainsi réalisée grâce d'une part aux coordonnées en latitude et en longitude des deux stations terrestres 2 et 3 et d'autre part des deux directions d'émission d1 et d2 des signaux radioélectriques déterminées par l'étape d'analyse 25, 35.

Enfin telle que représentée à la figure 6, l'étape d'analyse 35 permet d'identifier l'une après l'autre les deux directions d'émission d1 et d2 des signaux radioélectriques. Ces directions d'émission peuvent être obtenues en superposant sur un même diagramme 40 deux cardioïdes 41 et 42 représentatives d'une amplitude maximale des signaux radioélectriques reçus respectivement par chacune des deux antennes réceptrices 4, 14 et 4', 14' lors d'une rotation modifiant l'orientation angulaire des deux antennes réceptrices 4, 14 et 4', 14' par rapport à, dans un premier temps, la première station terrestre 2 puis, dans un deuxième temps, la deuxième station terrestre 3. Il est à noter que d'autres formes de diagrammes de rayonnement sont possibles ainsi qu'également d'autres configurations d'antennes, comme par exemple l'utilisation d'une unique antenne directive.

Sur un tel diagramme 40, en considérant les deux antennes montées à l'avant de l'aéronef, l'axe des abscisses X correspond à une direction transversale de l'aéronef s'étendant transversalement entre un côté gauche et un côté droit de l'aéronef et l'axe des ordonnées Y correspond quant à lui à une direction longitudinale de l'aéronef s'étendant transversalement entre une face arrière et une face avant de l'aéronef.

Ainsi, une première cardioïde 41 ou similaire peut par exemple correspondre au diagramme de rayonnement du réseau constitué par les deux antennes réceptrices 4, 14 et 4', 14' après application d'un déphasage de 90° sur l'une de ces deux antennes 4, 14. La deuxième cardioïde 42 ou similaire, peut être obtenue en appliquant le déphasage sur la deuxième antenne 4', 14'.

L'étape d'analyse 35 identifie l'une après l'autre chacune des deux directions d'émission d1 et d2 des signaux radioélectriques lorsque, pour chaque direction d'émission d1, d2, les deux cardioïdes 41 et 42 sont agencées symétriquement par rapport à l'axe des ordonnées Y du diagramme 40.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de géolocalisation (1) destiné à calculer des coordonnées courantes au moins en longitude et en latitude d'une position courante d'un aéronef (10, 11), ledit système de géolocalisation (1) comportant :
• au moins deux stations terrestres (2, 3) distinctes l'une de l'autre et aptes à émettre des signaux radioélectriques à des fréquences prédéterminées (f1, f2), lesdites au moins deux stations terrestres (2, 3) comportant une première station terrestre (2) émettant lesdits signaux radioélectriques selon au moins une première fréquence prédéterminée (f1) et une deuxième station terrestre (3) émettant lesdits signaux radioélectriques selon au moins une deuxième fréquence prédéterminée (f2),
• au moins deux antennes réceptrices (4, 4', 14, 14') comportant une première antenne réceptrice (4, 14) et une deuxième antenne réceptrice (4', 14') respectivement aptes à recevoir lesdits signaux radioélectriques, les antennes réceptrices comportant un degré de mobilité en rotation par rapport à un châssis fixe de l'aéronef
• une unité d'analyse (5) desdits signaux radioélectriques, ladite unité d'analyse (5) étant connectée auxdites au moins deux antennes réceptrices (4, 4', 14, 14') et permettant de déterminer au moins deux directions d'émission (d1, d2) desdits signaux radioélectriques, lesdites au moins deux directions d'émission (d1, d2) comportant d'une part une première direction d'émission (d1) correspondant à une première droite passant par ladite position courante de l'aéronef (10, 11) ainsi que par ladite première station terrestre (2) et d'autre part une deuxième direction d'émission (d2) correspondant à une deuxième droite passant par ladite position courante de l'aéronef (10, 11) ainsi que par ladite deuxième station terrestre (3),
• une mémoire (6) destinée à contenir tout ou partie d'une base de données comprenant au moins des données de position associant auxdites première et deuxième fréquences prédéterminées (f1 et f2) desdits signaux radioélectriques respectivement des premières coordonnées en latitude et en longitude de ladite première station terrestre (2) et des deuxièmes coordonnées en latitude et en longitude de ladite deuxième station terrestre (3), et
• un calculateur (7) pour calculer lesdites coordonnées courantes en latitude et en longitude correspondant à ladite position courante dudit aéronef (10, 11) à partir d'une part desdites premières et deuxièmes coordonnées en latitude et en longitude desdites première et deuxième stations terrestres (2 et 3) et d'autre part desdites première et deuxième directions d'émission (d1 et d2) desdits signaux radioélectriques,
ladite unité d'analyse (5) desdits signaux radioélectriques réalisant un premier déphasage de 90° desdits signaux radioélectriques reçus par ladite première antenne réceptrice (4, 14) puis un deuxième déphasage de 90° desdits signaux radioélectriques reçus par ladite deuxième antenne réceptrice (4', 14'),
**caractérisé en ce qu'**une rotation desdites première et deuxième antennes réceptrices (4, 14 et 4', 14') génère un diagramme (40) illustrant deux cardioïdes (41 et 42) représentatives d'une amplitude maximale desdits signaux radioélectriques reçus respectivement par chacune desdites première et deuxième antennes (4, 14 et 4', 14'), une direction d'émission desdites au moins deux directions d'émission (d1 et d2) desdits signaux radioélectriques étant identifiée lorsque lesdites deux cardioïdes (41 et 42) sont symétriques par rapport à un axe Y des ordonnées dudit diagramme (40).

2. Système selon la revendication 1,
**caractérisé en ce que** lesdites au moins deux antennes réceptrices (4, 4', 14, 14'), ladite unité d'analyse (5), ladite mémoire (6) et ledit calculateur (7) sont agencés sur ledit aéronef (10, 11).

3. Système selon l'une quelconque des revendications 1 à 2,
**caractérisé en ce que** lesdites fréquences prédéterminées (f1, f2) desdits signaux radioélectriques sont choisies dans une bande de fréquences réservée à une radiodiffusion commerciale en modulation de fréquence, ladite unité d'analyse (5) permettant de balayer ladite bande de fréquences pour identifier lesdites fréquences prédéterminées (f1, f2).

4. Système selon la revendication 3,
**caractérisé en ce que** lesdites fréquences prédéterminées (f1, f2) des signaux radioélectriques sont comprises dans une bande de fréquences entre 88MHz et 108MHz.

5. Système selon l'une quelconque des revendications 1 à 4,
**caractérisé en ce que** lesdits signaux radioélectriques comportent des signaux audios associés respectivement en parallèle à au moins un service de transmission de données numériques.

6. Système selon l'une quelconque des revendications 1 à 5,
**caractérisé en ce que** lesdites au moins deux antennes réceptrices (4, 4', 14, 14') sont respectivement choisies parmi le groupe comportant les antennes de type "quart d'onde" et les antennes de type "demi onde".

7. Système selon l'une quelconque des revendications 1 à 6,
**caractérisé en ce que** ladite première antenne réceptrice (4, 14) balaye une plage de fréquences prédéterminées des signaux radioélectriques et identifie lesdites au moins deux stations terrestres (2, 3) distinctes l'une de l'autre et ladite deuxième antenne réceptrice (4', 14') détermine lesdites au moins deux directions d'émission (d1, d2) desdits signaux radioélectriques.

8. Aéronef (10, 11) apte à recevoir des signaux radioélectriques à des fréquences prédéterminées (f1, f2), lesdits signaux radioélectriques étant émis par au moins deux stations terrestres (2, 3) comportant une première station terrestre (2) émettant lesdits signaux radioélectriques selon au moins une première fréquence prédéterminée (f1) et une deuxième station terrestre (3) émettant lesdits signaux radioélectriques selon au moins une deuxième fréquence prédéterminée (f2), ledit aéronef (10, 11) comportant :
• au moins deux antennes réceptrices (4, 4', 14, 14') comportant une première antenne réceptrice (4, 14) et une deuxième antenne réceptrice (4', 14') respectivement aptes à recevoir lesdits signaux radioélectriques,
• une unité d'analyse (5) desdits signaux radioélectriques, ladite unité d'analyse (5) étant connectée auxdites au moins deux antennes réceptrices (4, 4', 14, 14') et permettant de déterminer au moins deux directions d'émission (d1, d2) desdits signaux radioélectriques, lesdites au moins deux directions d'émission (d1, d2) comportant d'une part une première direction d'émission (d1) correspondant à une première droite passant par une position courante de l'aéronef (10, 11) ainsi que par ladite première station terrestre (2) et d'autre part une deuxième direction d'émission (d2) correspondant à une deuxième droite passant par ladite position courante de l'aéronef (10, 11) ainsi que par ladite deuxième station terrestre (3),
• une mémoire (6) destinée à contenir tout ou partie d'une base de données comprenant au moins des données de position associant auxdites première et deuxième fréquences prédéterminées (f1 et f2) desdits signaux radioélectriques respectivement des premières coordonnées en latitude et en longitude de ladite première station terrestre (2) et des deuxièmes coordonnées en latitude et en longitude de ladite deuxième station terrestre (3), et
• un calculateur (7) pour calculer des coordonnées courantes en latitude et en longitude correspondant à ladite position courante dudit aéronef (10, 11) à partir d'une part desdites premières et deuxièmes coordonnées en latitude et en longitude desdites première et deuxième stations terrestres (2 et 3) et d'autre part desdites première et deuxième directions d'émission (d1 et d2) desdits signaux radioélectriques,
ladite unité d'analyse (5) desdits signaux radioélectriques réalisant un premier déphasage de 90° desdits signaux radioélectriques reçus par ladite première antenne réceptrice (4, 14) puis un deuxième déphasage de 90° desdits signaux radioélectriques reçus par ladite deuxième antenne réceptrice (4', 14'),
**caractérisé en ce qu'**une rotation desdites première et deuxième antennes réceptrices (4, 14 et 4', 14') génère un diagramme (40) illustrant deux cardioïdes (41 et 42) représentatives d'une amplitude maximale desdits signaux radioélectriques reçus respectivement par chacune desdites première et deuxième antennes (4, 14 et 4', 14'), une direction d'émission desdites au moins deux directions d'émission (d1 et d2) desdits signaux radioélectriques étant identifiée lorsque lesdites deux cardioïdes (41 et 42) sont symétriques par rapport à un axe Y des ordonnées dudit diagramme (40).

9. Aéronef selon la revendication 8,
**caractérisé en ce que** ledit aéronef (10) comporte un instrument de navigation (12) permettant d'identifier un sens de déplacement dudit aéronef (10) par rapport à une référence de direction dans un plan horizontal passant par ledit aéronef (10).

10. Aéronef selon la revendication 9,
**caractérisé en ce que** ledit instrument de navigation (12) est choisi parmi le groupe comportant les compas magnétiques, les compas gyroscopiques, les compas électroniques et les compas satellitaires.

11. Aéronef selon l'une quelconque des revendications 8 à 10,
**caractérisé en ce que**, ladite au moins une antenne réceptrice (14, 14') comportant un degré de mobilité en rotation par rapport à un châssis fixe (15) dudit aéronef (11), ledit aéronef (11) comporte au moins un moteur (13, 13') permettant d'actionner en rotation ladite au moins une antenne réceptrice (14, 14') sur elle-même autour d'un axe de rotation Z',Z".

12. Procédé de géolocalisation (20, 21) destiné à calculer des coordonnées courantes au moins en longitude et en latitude d'une position courante d'un aéronef (10, 11), ledit procédé de géolocalisation (20, 21) comportant :
• deux étapes d'émission (22, 23) de signaux radioélectriques à des fréquences prédéterminées (f1, f2) respectivement par au moins deux stations terrestres (2, 3) distinctes l'une de l'autre, lesdites au moins deux stations terrestres (2, 3) comportant une première station terrestre (2) émettant lesdits signaux radioélectriques selon au moins une première fréquence prédéterminée (f1) et une deuxième station terrestre (3) émettant lesdits signaux radioélectriques selon au moins une deuxième fréquence prédéterminée (f2),
• une étape de réception (24) desdits signaux radioélectriques par au moins deux antennes réceptrices (4, 4', 14, 14') comportant une première antenne réceptrice (4, 14) et une deuxième antenne réceptrice (4', 14'),
• une étape d'analyse (25, 35) desdits signaux radioélectriques, ladite étape d'analyse (25, 35) permettant de déterminer au moins deux directions d'émission (d1, d2) desdits signaux radioélectriques, lesdites au moins deux directions d'émission (d1, d2) comportant d'une part une première direction d'émission (d1) correspondant à une première droite passant par ladite position courante de l'aéronef (10, 11) ainsi que par ladite première station terrestre (2) et d'autre part une deuxième direction d'émission (d2) correspondant à une deuxième droite passant par ladite position courante de l'aéronef (10, 11) ainsi que par ladite deuxième station terrestre (3),
• une étape de stockage (26) permettant de stocker dans une mémoire (6) tout ou partie d'une base de données comprenant au moins des données de position associant auxdites première et deuxième fréquences prédéterminées (f1 et f2) desdits signaux radioélectriques respectivement des premières coordonnées en latitude et en longitude de ladite première station terrestre (2) et des deuxièmes coordonnées en latitude et en longitude de ladite deuxième station terrestre (3), et
• une étape de calcul (27) permettant de calculer lesdites coordonnées courantes en latitude et en longitude correspondant à ladite position courante dudit aéronef (10, 11) à partir d'une part desdites premières et deuxièmes coordonnées en latitude et en longitude desdites première et deuxième stations terrestres (2 et 3) et d'autre part desdites première et deuxième directions d'émission (d1 et d2) desdits signaux radioélectriques,
ladite étape d'analyse (35) comportant une première sous étape de déphasage (30) consistant à déphaser de 90° lesdits signaux radioélectriques reçus par ladite première antenne réceptrice (4, 14) puis une deuxième sous étape de déphasage (31) consistant à déphaser de 90° lesdits signaux radioélectriques reçus par ladite deuxième antenne réceptrice (4', 14'),
ladite étape d'analyse (35) comporte une sous étape de rotation (32) desdites première et deuxième antennes réceptrices (4, 14 et 4', 14') permettant de générer un diagramme (40) illustrant deux cardioïdes (41 et 42) représentatives d'une amplitude maximale desdits signaux radioélectriques reçus respectivement par chacune desdites première et deuxième antennes (4, 14 et 4', 14'), une direction d'émission desdites au moins deux directions d'émission (d1 et d2) desdits signaux radioélectriques étant identifiée lorsque lesdites deux cardioïdes (41 et 42) sont symétriques par rapport à un axe Y des ordonnées dudit diagramme (40).

13. Procédé selon la revendication 12,
**caractérisé en ce que** ladite sous étape de rotation (32) desdites première et deuxième antennes réceptrices (4 et 4') est réalisée en faisant tourner ledit aéronef (10) sur lui-même autour d'un axe vertical Z passant par un centre géométrique (O) dudit aéronef (10).

14. Procédé selon la revendication 12,
**caractérisé en ce que**, lesdites première et deuxième antennes réceptrices (14 et 14') comportant respectivement chacune un degré de mobilité en rotation par rapport à un châssis fixe (15) dudit aéronef (11), ladite sous étape de rotation (32) est réalisée en actionnant en rotation, par au moins un moteur (13 et 13'), chaque antenne réceptrice (14, 14') sur elle-même autour d'un axe de rotation Z',Z".

## Patentansprüche

1. Ortungssystem (1) zum Berechnen aktueller Koordinaten zumindest der geographischen Länge und Breite einer aktuellen Position eines Flugzeugs (10, 11), wobei das Ortungssystem (1) umfasst:
• mindestens zwei Bodenstationen (2, 3), die voneinander verschieden sind und in der Lage sind, Funksignale auf vorgegebenen Frequenzen (f1, f2) zu senden, wobei die mindestens zwei Bodenstationen (2, 3) eine erste Bodenstation (2), die die Funksignale auf mindestens einer ersten vorgegebenen Frequenz (f1) sendet, und eine zweite Bodenstation (3), die die Funksignale auf mindestens einer zweiten vorgegebenen Frequenz (f2) sendet, umfassen,
• mindestens zwei Empfangsantennen (4, 4', 14, 14'), die eine erste Empfangsantenne (4, 14) und eine zweite Empfangsantenne (4', 14') umfassen, die jeweils in der Lage sind, die Funksignale zu empfangen, wobei die Empfangsantennen einen Grad an Drehbeweglichkeit in Bezug auf ein festes Chassis des Flugzeugs aufweisen,
• eine Analyseeinheit (5) für die Funksignale, wobei die Analyseeinheit (5) mit den mindestens zwei Empfangsantennen (4, 4', 14, 14') verbunden ist und es ermöglicht, mindestens zwei Übertragungsrichtungen (d1, d2) der Funksignale zu bestimmen, wobei die mindestens zwei Übertragungsrichtungen (d1, d2) einerseits eine erste Übertragungsrichtung (d1), die einer ersten Geraden entspricht, die durch die aktuelle Position des Flugzeugs (10, 11) und durch die erste Bodenstation (2) verläuft, und andererseits eine zweite Übertragungsrichtung (d2) umfassen, die einer zweiten Geraden entspricht, die durch die aktuelle Position des Flugzeugs (10, 11) und durch die zweite Bodenstation (3) verläuft,
• einen Speicher (6), der vorgesehen ist, um die Gesamtheit oder einen Teil einer Datenbank zu enthalten, die zumindest Positionsdaten enthält, die der ersten und der zweiten vorgegebenen Frequenz (f1 und f2) der Funksignale jeweils erste Breiten- und Längenkoordinaten der ersten Bodenstation (2) und zweite Breiten- und Längenkoordinaten der zweiten Bodenstation (3) zuordnen, und
• einen Rechner (7) zum Berechnen der aktuellen Breiten- und Längenkoordinaten, die der aktuellen Position des Flugzeugs (10, 11) entsprechen, aus einerseits den ersten und zweiten Breiten- und Längenkoordinaten der ersten und der zweiten Bodenstation (2 und 3) und andererseits der ersten und der zweiten Übertragungsrichtung (d1 und d2) der Funksignale,
wobei die Analyseeinheit (5) der Funksignale eine erste Phasenverschiebung von 90° der von der ersten Empfangsantenne (4, 14) empfangenen Funksignale und dann eine zweite Phasenverschiebung von 90° der von der zweiten Empfangsantenne (4', 14') empfangenen Funksignale durchführt,
**dadurch gekennzeichnet, dass** eine Drehung der ersten und der zweiten Empfangsantenne (4, 14 und 4', 14') ein Diagramm (40) erzeugt, das zwei Kardioide (41 und 42) bildet, die für eine maximale Amplitude der Funksignale repräsentativ sind, die jeweils von der ersten und der zweiten Antenne (4, 14 und 4', 14') empfangen werden, wobei eine Übertragungsrichtung der mindestens zwei Übertragungsrichtungen (d1 und d2) der Funksignale identifiziert wird, wenn die beiden Kardioide (41 und 42) symmetrisch in Bezug auf eine Y-Achse der Ordinaten des Diagramms (40) sind.

2. System nach Anspruch 1,
**dadurch gekennzeichnet, dass** die mindestens zwei Empfangsantennen (4, 4', 14, 14'), die Analyseeinheit (5), der Speicher (6) und der Rechner (7) an Bord des Flugzeugs (10, 11) vorgesehen sind.

3. System nach einem der Ansprüche 1 bis 2,
**dadurch gekennzeichnet, dass** die vorgegebenen Frequenzen (f1, f2) der Funksignale aus einem Frequenzband ausgewählt sind, das für kommerziellen FM-Rundfunk reserviert ist, wobei die Analyseeinheit (5) in der Lage ist, das Frequenzband abzutasten, um die vorgegebenen Frequenzen (f1, f2) zu identifizieren.

4. System nach Anspruch 3,
**dadurch gekennzeichnet, dass** die vorgegebenen Frequenzen (f1, f2) der Funksignale in einem Frequenzband zwischen 88MHz und 108MHz liegen.

5. System nach einem der Ansprüche 1 bis 4,
**dadurch gekennzeichnet, dass** die Funksignale Audiosignale umfassen, die jeweils parallel mindestens einem digitalen Datenübertragungsdienst zugeordnet sind.

6. System nach einem der Ansprüche 1 bis 5,
**dadurch gekennzeichnet, dass** die mindestens zwei Empfangsantennen (4, 4', 14, 14') jeweils aus der Gruppe ausgewählt sind, die Antennen des "Viertelwellen"-Typs und Antennen des "Halbwellen"-Typs umfasst.

7. System nach einem der Ansprüche 1 bis 6,
**dadurch gekennzeichnet, dass** die erste Empfangsantenne (4, 14) einen Bereich von vorgegebenen Frequenzen der Funksignale abtastet und die mindestens zwei voneinander verschiedenen Bodenstationen (2, 3) identifiziert und die zweite Empfangsantenne (4', 14') die mindestens zwei Übertragungsrichtungen (d1, d2) der Funksignale bestimmt.

8. Flugzeug (10, 11), das in der Lage ist, Funksignale auf vorgegebenen Frequenzen (f1, f2) zu empfangen, wobei die Funksignale von mindestens zwei Bodenstationen (2, 3) gesendet werden, die eine erste Bodenstation (2), die die Funksignale auf mindestens einer ersten vorgegebenen Frequenz (f1) sendet, und eine zweite Bodenstation (3), die die Funksignale auf mindestens einer zweiten vorgegebenen Frequenz (f2) sendet, umfassen, wobei das Flugzeug (10, 11) aufweist:
• mindestens zwei Empfangsantennen (4, 4', 14, 14'), die eine erste Empfangsantenne (4, 14) und eine zweite Empfangsantenne (4', 14') umfassen, die jeweils in der Lage sind, die Funksignale zu empfangen,
• eine Analyseeinheit (5) für die Funksignale, wobei die Analyseeinheit (5) mit den mindestens zwei Empfangsantennen (4, 4', 14, 14') verbunden ist und es ermöglicht, mindestens zwei Übertragungsrichtungen (d1, d2) der Funksignale zu bestimmen, wobei die mindestens zwei Übertragungsrichtungen (d1, d2) einerseits eine erste Übertragungsrichtung (d1), die einer ersten Geraden entspricht, die durch eine aktuelle Position des Flugzeugs (10, 11) und durch die erste Bodenstation (2) verläuft, und andererseits eine zweite Übertragungsrichtung (d2) umfassen, die einer zweiten Geraden entspricht, die durch die aktuelle Position des Flugzeugs (10, 11) und durch die zweite Bodenstation (3) verläuft,
• einen Speicher (6), der vorgesehen ist, um die Gesamtheit oder einen Teil einer Datenbank zu enthalten, die zumindest Positionsdaten enthält, die der ersten und der zweiten vorgegebenen Frequenz (f1 und f2) der Funksignale jeweils erste Breiten- und Längenkoordinaten der ersten Bodenstation (2) und zweite Breiten- und Längenkoordinaten der zweiten Bodenstation (3) zuordnen, und
• einen Rechner (7) zum Berechnen der aktuellen Breiten- und Längenkoordinaten, die der aktuellen Position des Flugzeugs (10, 11) entsprechen, aus einerseits den ersten und zweiten Breiten- und Längenkoordinaten der ersten und der zweiten Bodenstation (2 und 3) und andererseits der ersten und der zweiten Übertragungsrichtung (d1 und d2) der Funksignale,
wobei die Analyseeinheit (5) der Funksignale eine erste Phasenverschiebung von 90° der von der ersten Empfangsantenne (4, 14) empfangenen Funksignale und dann eine zweite Phasenverschiebung von 90° der von der zweiten Empfangsantenne (4', 14') empfangenen Funksignale durchführt,
**dadurch gekennzeichnet, dass** eine Drehung der ersten und der zweiten Empfangsantenne (4, 14 und 4', 14') ein Muster (40) erzeugt, das zwei Kardioide (41 und 42) bildet, die für eine maximale Amplitude der Funksignale repräsentativ sind, die jeweils von der ersten und der zweiten Antenne (4, 14 und 4', 14') empfangen werden, wobei eine Übertragungsrichtung der mindestens zwei Übertragungsrichtungen (d1 und d2) der Funksignale identifiziert wird, wenn die beiden Kardioide (41 und 42) symmetrisch in Bezug auf eine Y-Achse der Ordinaten des Diagramms (40) sind.

9. Flugzeug nach Anspruch 8,
**dadurch gekennzeichnet, dass** das Flugzeug (10) ein Navigationsinstrument (12) aufweist, das es ermöglicht, eine Bewegungsrichtung des Flugzeugs (10) in Bezug auf eine Richtungsreferenz in einer durch das Flugzeug (10) verlaufenden horizontalen Ebene zu identifizieren.

10. Flugzeug nach Anspruch 9,
**dadurch gekennzeichnet, dass** das Navigationsinstrument (12) aus der Gruppe ausgewählt ist, die aus Magnetkompassen, Kreiselkompassen, elektronischen Kompassen und Satellitenkompassen besteht.

11. Flugzeug nach einem der Ansprüche 8 bis 10,
**dadurch gekennzeichnet, dass** die mindestens eine Empfangsantenne (14, 14') einen Grad an Drehbeweglichkeit in Bezug auf ein festes Chassis (15) des Flugzeugs (11) aufweist, wobei das Flugzeug (11) mindestens einen Motor (13, 13') umfasst, der es ermöglicht, die mindestens eine Empfangsantenne (14, 14') um sich selbst um eine Drehachse Z', Z" zu drehen.

12. Ortungsverfahren (20, 21) zum Berechnen von aktuellen Koordinaten zumindest der geographischen Länge und Breite einer aktuellen Position eines Flugzeugs (10, 11), wobei das Ortungsverfahren (20, 21) umfasst:
• zwei Schritte (22, 23) des Sendens von Funksignalen auf vorgegebenen Frequenzen (f1, f2) jeweils durch mindestens zwei voneinander verschiedene Bodenstationen (2, 3), wobei die mindestens zwei Bodenstationen (2, 3) eine erste Bodenstation (2), die die Funksignale auf mindestens einer ersten vorgegebenen Frequenz (f1) sendet, und eine zweite Bodenstation (3), die die Funksignale auf mindestens einer zweiten vorgegebenen Frequenz (f2) sendet, umfassen,
• einen Schritt (24) des Empfangens der Funksignale durch mindestens zwei Empfangsantennen (4, 4', 14, 14'), die eine erste Empfangsantenne (4, 14) und eine zweite Empfangsantenne (4', 14') umfassen,
• einen Schritt (25, 35) des Analysierens der Funksignale, wobei der Analyseschritt (25, 35) es ermöglicht, mindestens zwei Übertragungsrichtungen (d1, d2) der Funksignale zu bestimmen, wobei die mindestens zwei Übertragungsrichtungen (d1, d2) einerseits eine erste Übertragungsrichtung (d1), die einer ersten Geraden entspricht, die durch die aktuelle Position des Flugzeugs (10, 11) und durch die erste Bodenstation (2) verläuft, und andererseits eine zweite Übertragungsrichtung (d2) umfassen, die einer zweiten geraden Linie entspricht, die durch die aktuelle Position des Flugzeugs (10, 11) und durch die zweite Bodenstation (3) verläuft,
• einen Schritt (26) des Speicherns, der dazu dient, in einem Speicher (6) die Gesamtheit oder einen Teil einer Datenbank zu speichern, die zumindest Positionsdaten enthält, die der ersten und der zweiten vorgegebenen Frequenz (f1 und f2) der Funksignale jeweils erste Breiten- und Längenkoordinaten der ersten Bodenstation (2) und zweite Breiten- und Längenkoordinaten der zweiten Bodenstation (3) zuordnen, und
• einen Schritt des Berechnens (27), der es ermöglicht, die aktuellen Breiten- und Längenkoordinaten, die der aktuellen Position des Flugzeugs (10, 11) entsprechen, einerseits aus den ersten und zweiten Breiten- und Längenkoordinaten der ersten und der zweiten Bodenstation (2 und 3) und andererseits aus der ersten und der zweiten Übertragungsrichtung (d1 und d2) der Funksignale zu berechnen,
wobei der Schritt des Analysierens (35) einen ersten Phasenverschiebungs-Unterschritt (30), der darin besteht, die Phase der von der ersten Empfangsantenne (4, 14) empfangenen Funksignale um 90° zu verschieben, und dann einen zweiten Phasenverschiebungs-Unterschritt (31) umfasst, der darin besteht, die Phase der von der zweiten Empfangsantenne (4', 14') empfangenen Funksignale um 90° zu verschieben,
der Schritt des Analysierens(35) einen Unterschritt des Drehens (32) der ersten und zweiten Empfangsantenne (4, 14 und 4', 14') umfasst, um ein Diagramm (40) zu erzeugen, das zwei Kardioide (41 und 42) bildet, die für eine maximale Amplitude der Funksignale repräsentativ sind, die jeweils von der ersten und der zweiten Antenne (4, 14 und 4', 14') empfangen werden, wobei eine Übertragungsrichtung der mindestens zwei Übertragungsrichtungen (d1 und d2) der Funksignale identifiziert wird, wenn die beiden Kardioide (41 und 42) symmetrisch in Bezug auf eine Y-Achse der Ordinaten des Diagramms (40) sind.

13. Verfahren nach Anspruch 12,
**dadurch gekennzeichnet, dass** der Unterschritt des Drehens (32) der ersten und der zweiten Empfangsantenne (4 und 4') durchgeführt wird durch Drehen des Flugzeugs (10) um sich selbst um eine vertikale Achse Z, die durch einen geometrischen Mittelpunkt (O) des Flugzeugs (10) verläuft.

14. Verfahren nach Anspruch 12,
**dadurch gekennzeichnet, dass** die erste und die zweite Empfangsantenne (14 und 14') jeweils einen Grad an Drehbeweglichkeit in Bezug auf ein feststehendes Chassis (15) des Flugzeugs (11) aufweisen, und dass der Unterschritt des Drehens (32) durchgeführt wird, indem jede Empfangsantenne (14, 14') durch mindestens einen Motor (13 und 13') um sich selbst um eine Drehachse Z', Z" gedreht wird.

## Claims

1. Geolocation system (1) for calculating current coordinates at least in longitude and latitude of a current position of an aircraft (10, 11), said location system (1) comprising:
• at least two earth stations (2, 3) which are distinct from each other and are capable of transmitting radio signals at predetermined frequencies (f1, f2), said at least two earth stations (2, 3) comprising a first earth station (2) transmitting said radio signals according to at least a first predetermined frequency (f1) and a second earth station (3) transmitting said radio signals in at least a second predetermined frequency (f2),
• at least two receiving antennas (4, 4', 14, 14') comprising a first receiving antenna (4, 14) and a second receiving antenna (4', 14') respectively capable of receiving said radio signals, the receiving antennas having a degree of rotational mobility relative to a fixed frame of the aircraft,
• an analysis unit (5) of said radio signals, said analysis unit (5) being connected to said at least two receiving antennas (4, 4', 14, 14') and making it possible to determine at least two directions of transmission (d1, d2) of said radio signals, said at least two transmission directions (d1, d2) comprising on the one hand a first transmission direction (d1) corresponding to a first line passing through said current position of the aircraft (10, 11) as well as through said first ground station (2) and secondly a second transmission direction (d2) corresponding to a second straight line passing through said current position of the aircraft (10, 11) as well as through said second ground station (3),
• a memory (6) intended to contain all or part of a database comprising at least position data associating with said first and second predetermined frequencies (f1 and f2) of said radio signals respectively first coordinates in latitude and longitude of said first ground station (2) and second coordinates in latitude and longitude of said second ground station (3), and
• a calculator (7) for calculating said current coordinates in latitude and longitude corresponding to said current position of said aircraft (10, 11) from a part of said first and second coordinates in latitude and longitude of said first and second ground stations (2 and 3) and on the other hand said first and second transmission directions (d1 and d2) of said radio signals,
said analysing unit (5) of said radio signals performing a first phase shift of 90° of said radio signals received by said first receiving antenna (4, 14) and then a second phase shift of 90° of said radio signals received by said second receiving antenna (4', 14'),
**characterised in that** a rotation (32) of said first and second receiving antennas (4, 14 and 4', 14') generates a diagram (40) illustrating two cardioids (41 and 42) representative of a maximum amplitude of said radio signals respectively received by each of said first and second antennas (4, 14 and 4', 14'), a direction of transmission of said at least two transmission directions (d1 and d2) of said radio signals being identified when said two cardioids (41 and 42) are symmetrical with respect to a Y axis of the ordinates of said diagram (40).

2. System according to claim 1, **characterised in that** said at least two receiving antennas (4, 4', 14, 14'), said analysing unit (5), said memory (6) and said calculator (7) are arranged on said aircraft (10, 11).

3. System according to either claim 1 or claim 2,**characterised in that** said predetermined frequencies (f1, f2) of said radio signals are selected in a frequency band reserved for a commercial frequency modulation broadcast, said analysis unit (5) making it possible to scan said frequency band for identifying said predetermined frequencies (f1, f2).

4. System according to claim 3, **characterised in that** said predetermined frequencies (f1, f2) of the radio signals are in a frequency band between 88MHz and 108MHz.

5. System according to any one of claims 1 to 4, **characterised in that** said radio signals comprise audio signals respectively associated in parallel with at least one digital data transmission service.

6. System according to any one of claims 1 to 5, **characterised in that** said at least two receiving antennas (4, 4', 14, 14') are respectively selected from the group consisting of "quarter-wave" type antennas and "half-wave" type antennas.

7. System according to any one of claims 1 to 6, **characterised in that** said first receiving antenna (4, 14) scans a predetermined frequency range of the radio signals and identifies said at least two earth stations (2, 3) distinct from each other and said second receiving antenna (4', 14') determines said at least two transmission directions (d1, d2) of said radio signals.

8. Aircraft (10, 11) capable of receiving radio signals at predetermined frequencies (f1, f2), said radio signals being transmitted by at least two earth stations (2, 3) comprising a first earth station (2) transmitting said radio signals according to at least a first predetermined frequency (f1) and a second earth station (3) transmitting said radio signals in at least a second predetermined frequency (f2), said aircraft (10, 11) comprising:
• at least two receiving antennas (4, 4', 14, 14') comprising a first receiving antenna (4, 14) and a second receiving antenna (4', 14') respectively capable of receiving said radio signals,
• an analysis unit (5) of said radio signals, said analysis unit (5) being connected to said at least two receiving antennas (4, 4', 14, 14') and making it possible to determine at least two directions of transmission (d1, d2) of said radio signals, said at least two transmission directions (d1, d2) comprising firstly a first transmission direction (d1) corresponding to a first straight line passing through a current position of the aircraft (10, 11) as well as through said first ground station (2) and secondly a second transmission direction (d2) corresponding to a second line passing through said current position of the aircraft (10, 11) as well as through said second ground station (3),
• a memory (6) intended to contain all or part of a database comprising at least position data associating with said first and second predetermined frequencies (f1 and f2) of said radio signals respectively first coordinates in latitude and longitude of said first ground station (2) and second coordinates in latitude and longitude of said second land station (3), and
• a calculator (7) for calculating current coordinates in latitude and longitude corresponding to said current position of said aircraft (10, 11) from a part of said first and second coordinates in latitude and longitude of said first and second ground stations (2 and 3) and on the other hand said first and second transmission directions (d1 and d2) of said radio signals,
said analysing unit (5) of said radio signals performing a first phase shift of 90° of said radio signals received by said first receiving antenna (4, 14) and then a second phase shift of 90° of said radio signals received by said second receiving antenna (4', 14'),
**characterised in that** a rotation (32) of said first and second receiving antennas (4, 14 and 4', 14') generates a diagram (40) illustrating two cardioids (41 and 42) representative of a maximum amplitude of said radio signals respectively received by each of said first and second antennas (4, 14 and 4', 14'), a direction of transmission of said at least two transmission directions (d1 and d2) said radio signals being identified when said two cardioids (41 and 42) are symmetrical with respect to a Y axis of the ordinates of said diagram (40) .

9. Aircraft according to claim 8, **characterised in that** said aircraft (10) comprises a navigation instrument (12) making it possible to identify a direction of movement of said aircraft (10) relative to a reference direction in a horizontal plane passing through said aircraft (10).

10. Aircraft according to claim 9, **characterised in that** said navigation instrument (12) is selected from the group consisting of magnetic compasses, gyroscopic compasses, electronic compasses and satellite compasses.

11. Aircraft according to any one of claims 8 to 10, **characterised in that** said at least one receiving antenna (14, 14') having a degree of rotational mobility with respect to a fixed frame (15) of said aircraft (11), said aircraft (11) comprises at least one motor (13, 13') making it possible to rotate said at least one receiving antenna (14, 14') about itself about an axis of rotation Z', Z".

12. Geolocation method (20, 21) for computing current coordinates at least in longitude and latitude of a current position of an aircraft (10, 11), said geolocation method (20, 21) comprising:
• two transmission steps (22, 23) of radio signals at predetermined frequencies (f1, f2) respectively by at least two earth stations (2, 3) distinct from each other, said at least two earth stations (2, 3) having a first earth station (2) transmitting said radio signals according to at least a first predetermined frequency (f1) and a second earth station (3) transmitting said radio signals in at least a second predetermined frequency (f2),
• a step of receiving (24) said radio signals by at least two receiving antennas (4, 4', 14, 14') comprising a first receiving antenna (4, 14) and a second receiving antenna (4', 14'),
• a step of analysing (25, 35) said radio signals, said analysing step (25, 35) making it possible to determine at least two transmission directions (d1, d2) of said radio signals, said at least two directions of transmission (d1, d2) comprising on the one hand a first transmission direction (d1) corresponding to a first straight line passing through said current position of the aircraft (10, 11) as well as though said first earth station (2) and secondly a second transmission direction (d2) corresponding to a second line passing through said current position of the aircraft (10, 11) and through said second ground station (3),
• a storage step (26) making it possible to store in a memory (6) all or part of a database comprising at least position data associating with said first and second predetermined frequencies (f1 and f2) said radio signals respectively of first coordinates in latitude and longitude of said first ground station (2) and the second coordinates in latitude and longitude of said second ground station (3), and
• a computing step (27) making it possible to calculate said current coordinates in latitude and longitude corresponding to said current position of said aircraft (10, 11) from a first of said first and second coordinates in latitude and longitude of said first and second earth stations (2 and 3) and secondly said first and second transmission directions (d1 and d2) of said radio signals,
said analysing step (35) comprising a first phase shifting sub-step (30) consisting of phase shifting by 90° said radio signals received by said first receiving antenna (4, 14) and then a second phase shifting sub-step (31) consisting of phase shifting said radio signals received by said second receiving antenna (4', 14') by 90°,
said analysing step (35) comprising a sub-step of rotation (32) of said first and second receiving antennas (4, 14 and 4', 14') making it possible to generate a diagram (40) illustrating two cardioids (41 and 42) representative of a maximum amplitude of said radio signals respectively received by each of said first and second antennas (4, 14 and 4', 14'), a direction of transmission of said at least two transmission directions (d1 and d2) said radio signals being identified when said two cardioids (41 and 42) are symmetrical with respect to a Y axis of the ordinates of said diagram (40).

13. Method according to claim 12, **characterised in that** said sub-step of rotation (32) of said first and second receiving antennas (4 and 4') is achieved by rotating said aircraft (10) about itself about a vertical axis Z passing through a geometric centre (O) of said aircraft (10).

14. Method according to claim 12, **characterised in that** said first and second receiving antennas (14 and 14') each respectively having a degree of rotational mobility relative to a fixed frame (15) of said aircraft (11), said sub-step of rotation (32) is performed by operating in rotation, by at least one motor (13 and 13'), each receiving antenna (14, 14') on itself about an axis of rotation Z', Z".
